# EUROPEAN PATENT APPLICATION

(11) **EP 3 805 081 A1**
(43) Date of publication of application: **14.04.2021**
(21) Application number: 19202331.5
(22) Date of filing: 09.10.2019
(51) Int. Cl.: B62K 11/00, B62J 45/413, B62J 99/00, B62J 45/41

(54) **BALANCING BOARD**

(71) Applicant: Wang, Liang, City of Industry, CA 91748 (US)
(72) Inventor: Wang, Liang, City of Industry, CA 91748 (US)
(74) Representative: Lang, Christian

(57) **Abstract**

A balancing board (300) may include a first and a second platform section (310, 330). Each platform section (310, 330) may include a housing formed of a bottom housing member (311, 331) and a top housing member (312, 332). The top housing members (312, 332) may have a foot placement section (313, 333) or area formed integrally therewith. In one embodiment, the balancing board (300) may include a water jet (360) that includes a water receiving space (361) and a water fog generating unit (362). More specifically, when the user stands on the balancing board (300), the weight of the user can trigger the water jet (360), wherein the water can be transported to the water fog generating unit (362) from the water receiving space (361) and the water fog can then be generated, so there is more entertainment effect when the user stands on the balancing board (300).

## Description

### FIELD OF THE INVENTION

The present invention relates to a balancing board, and more particularly to the balancing board that can be more entertaining when the user stands on it.

### BACKGROUND OF THE INVENTION

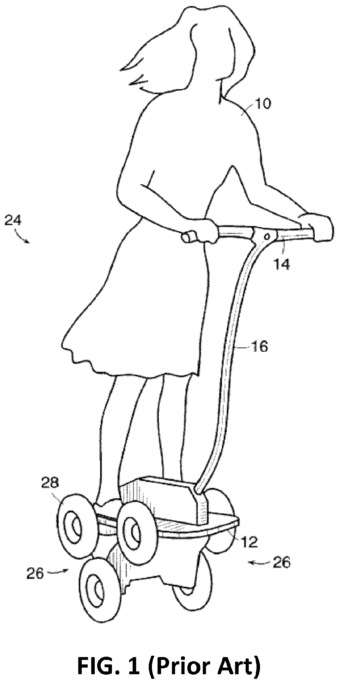

Personal vehicles may be self-propelled and user-guidable, and may entail stabilization in one or both of the fore-aft or left-right planes. Vehicles of this sort, as shown in FIG. 1, may be operated in a mode in which motion of the vehicle, including acceleration (both linear and turning), is controlled partially or entirely by leaning of the vehicle as caused by a subject riding the vehicle. Several such vehicles are described in U.S. Pat. No. 5,971,091 ("the '091 patent"), issued Oct. 26, 1999, which is incorporated herein by reference.

In recent years, electric transporters of the gyropode type person carriers equipped with electric motors and a gyroscopic technology are developed. The electric transporter enables the person to stand in balanced fashion on both parallel wheels without the user having to compensate for the instability caused by the center of gravity being out of plumb. Thus, the user is standing and does not need to place their foot on the ground either to balance or to advance.

More specifically, dynamically stabilized transporters refer to personal transporters having a control system that actively maintains the stability of the transporter while the transporter is operating. The control system maintains the stability of the transporter by continuously sensing the orientation of the transporter, determining the corrective action to maintain stability, and commanding the wheel motors to make the corrective action.

U.S. Pat. No.: 8,738,278 ("the '278 patent") to Chen discloses a two-wheel, self-balancing personal vehicle having independently movable foot placement sections. The foot placement sections have an associated wheel, sensor and motor and are independently self-balancing which gives the user independent control over the movement of each platform section by the magnitude and direction of tilt a user induces in a given platform section.

However, neither conventional transporters in the '091 patent nor self-balancing vehicles in the '278 patent discloses a water jet that is configured to generate water smog when the user stands on the self-balancing board. Therefore, there remains a need for a new and improved self-balancing board that includes a water jet to provide more entertainment effect.

### SUMMARY OF THE INVENTION

In one aspect, a balancing board may include a first and a second platform section. Each platform section may include a housing formed of a bottom housing member and a top housing member. The top housing members may have a foot placement section or area formed integrally therewith or affixed thereon. The foot placement section is preferably of sufficient size to receive the foot of a user and may include a tread or the like for traction and/or comfort.

The housing may be formed of metal, sturdy plastic or other suitable material. The housing members may be molded and incorporate strengthening reinforcements, and be shaped to receive and "nest" the internal components of the vehicle. The bottom and top housing sections are formed complementarily so that after the internal components are installed, the top housing section is fitted onto the bottom housing section and secured with screws or other fasteners. Each platform section includes a wheel, and each wheel preferably has an axle and motorized hub assembly, which are known in the art.

In one embodiment, each platform section preferably includes a position sensor, which may be a gyroscopic sensor, for independent measurement of the position of the respective platform section. The sensors are preferably mounted on circuit boards that may be attached to the interior of the respective bottom housings. The sensors are preferably mounted on circuit boards that may be attached to the interior of the respective bottom housings. Sensed position information from sensor is used to drive the corresponding motor and wheel. The control logic for translating position data to motor drive signals may be centralized or split between the two platform sections. For example, the control logic may be electrically connected to sensors and to drive motors, electrical conduits connecting through the connecting shaft between sensors, control logic, and motors.

Communication between these components is primarily in the direction of data from the sensor and drive signals to the motor. However, communication in the other direction may include start signals (i.e. to the sensor), status signals (i.e. from the motor indicating an unsafe condition (e.g. excessive rpm), or a motor/drive failure or irregularity). This information, in addition to battery information, etc., could be communicated back to a user via lights or another interface, or communicated wirelessly (e.g. blue-tooth) from the vehicle to a hand-held device such as a mobile phone. In addition, if the platform sections have separate and independent control logic, these processing units may still share information with one another, such as status, safe operation information, etc.

In one embodiment, the two platform sections are movably coupled to one another with the shaft about which they may rotate (or pivot with respect to one another). Brackets and flange brackets may secure the shaft to the platform sections, with the flange brackets preferably configured to prevent or reduce the entry of dirt or moisture within the housings. The shaft may be hollow in part and thereby allowing for the passage of conduits therethrough. Pivoting or rotating shaft arrangements are known in the art, and others may be used without deviating from the present invention as long as the foot placement sections may move independently.

In another embodiment, the balancing board may include a motion sensor to detect the user's motion, and when the motion sensor detects a pre-stored motion from the user, the motion sensor may transmit such information to the motors and the wheels through the wireless communicating module to trigger the balancing board to make certain movement.

In a further embodiment, the balancing board may include a water jet having a water receiving space and a water fog generating unit that can be triggered when the user stands on the balancing board.

### BRIEF DESCRIPTION OF THE DRAWINGS

FIG. 1 is a prior art disclosing a transportation vehicle for transporting individuals over ground having a surface that may be irregular.

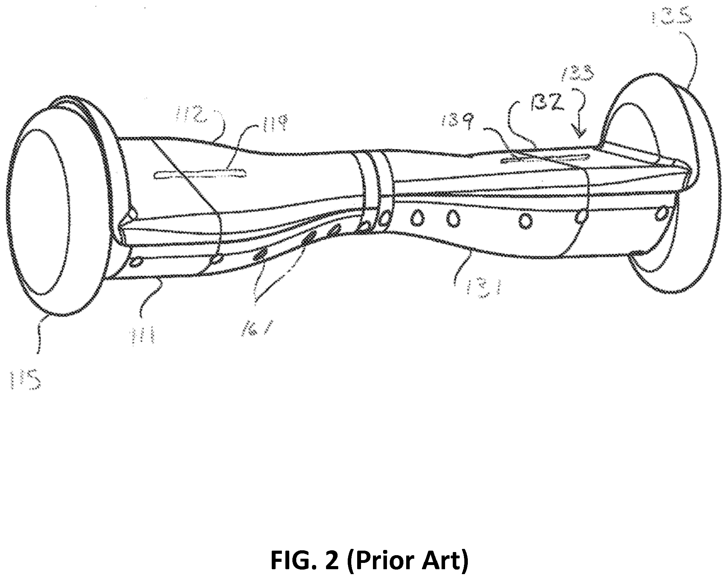

FIG. 2 is a prior art disclosing a two-wheel, self-balancing personal vehicle having independently movable foot placement sections.
FIG. 3 illustrates a schematic view of a balancing board in the present invention.
FIG. 4 illustrates a block diagram of the balancing board in FIG. 3 in the present invention.

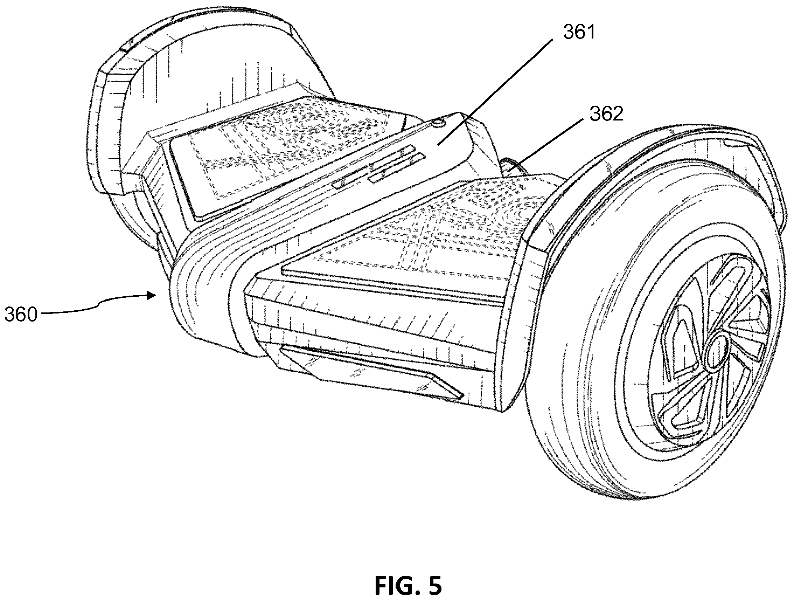

FIG. 5 illustrates a schematic view of the balancing board with the water jet in the present invention.

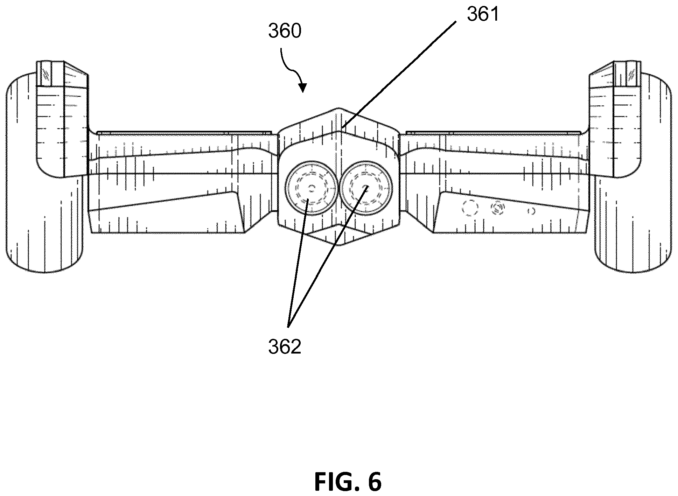

FIG. 6 is a schematic view from another angle of the water jet in the present invention.

### DETAILED DESCRIPTION OF THE INVENTION

The detailed description set forth below is intended as a description of the presently exemplary device provided in accordance with aspects of the present invention and is not intended to represent the only forms in which the present invention may be prepared or utilized. It is to be understood, rather, that the same or equivalent functions and components may be accomplished by different embodiments that are also intended to be encompassed within the spirit and scope of the invention.

Unless defined otherwise, all technical and scientific terms used herein have the same meaning as commonly understood to one of ordinary skill in the art to which this invention belongs. Although any methods, devices and materials similar or equivalent to those described can be used in the practice or testing of the invention, the exemplary methods, devices and materials are now described.

All publications mentioned are incorporated by reference for the purpose of describing and disclosing, for example, the designs and methodologies that are described in the publications that might be used in connection with the presently described invention. The publications listed or discussed above, below and throughout the text are provided solely for their disclosure prior to the filing date of the present application. Nothing herein is to be construed as an admission that the inventors are not entitled to antedate such disclosure by virtue of prior invention.

As used in the description herein and throughout the claims that follow, the meaning of "a", "an", and "the" includes reference to the plural unless the context clearly dictates otherwise. Also, as used in the description herein and throughout the claims that follow, the terms "comprise or comprising", "include or including", "have or having", "contain or containing" and the like are to be understood to be open-ended, i.e., to mean including but not limited to. As used in the description herein and throughout the claims that follow, the meaning of "in" includes "in" and "on" unless the context clearly dictates otherwise.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the embodiments. As used herein, the term "and/or" includes any and all combinations of one or more of the associated listed items.

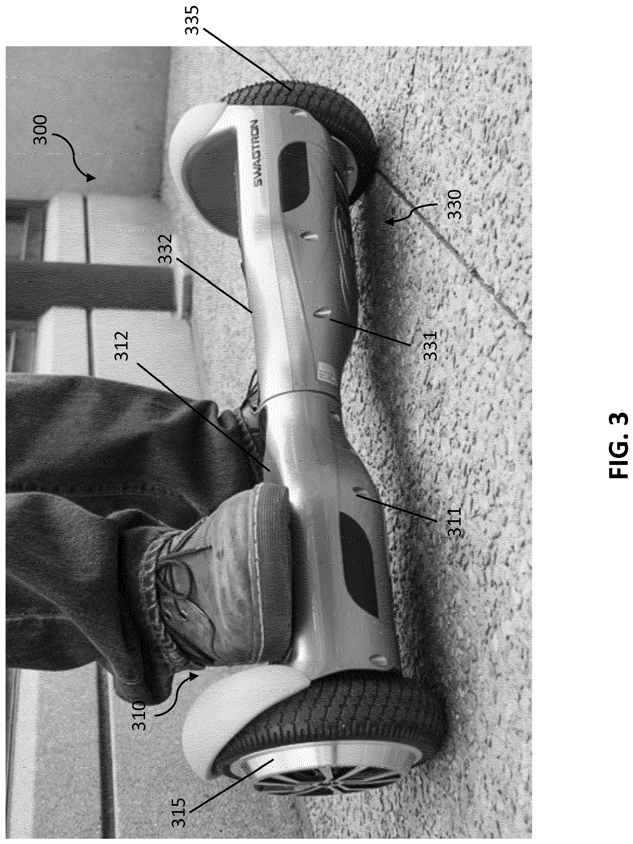

In one aspect, as shown in FIG. 3, a balancing board 300 may include a first and a second platform section 310 and 330. Each platform section (310, 330) may include a housing formed of a bottom housing member (311, 331) and a top housing member (312, 332). The top housing members may have a foot placement section or area (313, 333) formed integrally therewith or affixed thereon. The foot placement section is preferably of sufficient size to receive the foot of a user and may include a tread or the like for traction and/or comfort.

The housing may be formed of metal, sturdy plastic or other suitable material. The housing members may be molded and incorporate strengthening reinforcements, and be shaped to receive and "nest" the internal components of the vehicle. The bottom and top housing sections are formed complementarily so that after the internal components are installed, the top housing section is fitted onto the bottom housing section and secured with screws or other fasteners. Each platform section includes a wheel (315, 335), and each wheel preferably has an axle and motorized hub assembly, which are known in the art.

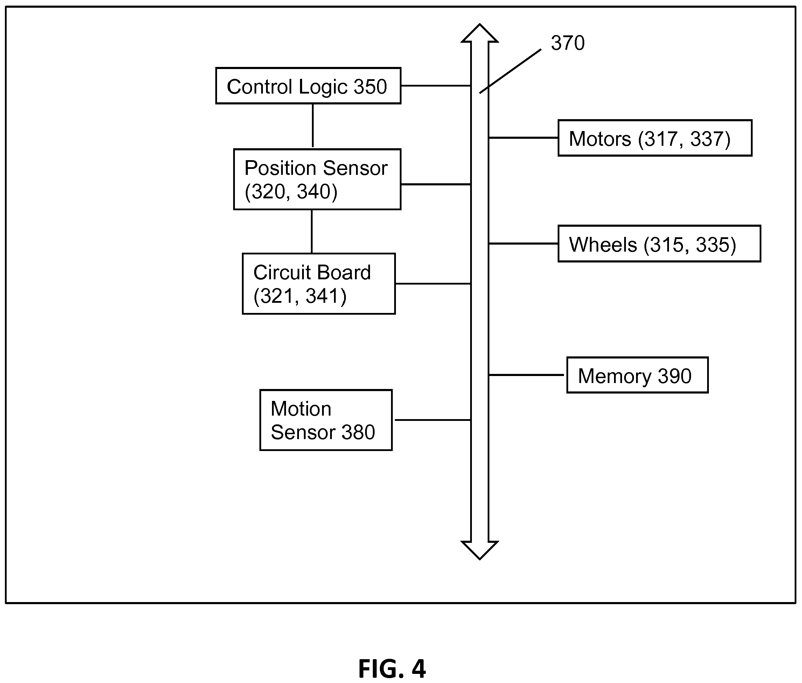

In one embodiment, as shown in FIG. 4, each platform section preferably includes a position sensor (320, 340), which may be a gyroscopic sensor, for independent measurement of the position of the respective platform section. The sensors are preferably mounted on circuit boards that may be attached to the interior of the respective bottom housings. The sensors are preferably mounted on circuit boards (321, 341) that may be attached to the interior of the respective bottom housings. Sensed position information from sensor (320, 340) is used to drive the corresponding motor (317, 337) and wheel (315, 335). The control logic 350 for translating position data to motor drive signals may be centralized or split between the two platform sections. For example, the control logic 350 may be electrically connected to sensors (320, 340) and to drive motors (317, 337), electrical conduits connecting through the connecting shaft 370 between sensors (320, 340), control logic 350, and motors (317, 337).

Communication between these components is primarily in the direction of data from the sensor and drive signals to the motor. However, communication in the other direction may include start signals (i.e. to the sensor), status signals (i.e. from the motor indicating an unsafe condition (e.g. excessive rpm), or a motor/drive failure or irregularity). This information, in addition to battery information, etc., could be communicated back to a user via lights or another interface, or communicated wirelessly (e.g. blue-tooth) from the vehicle to a hand-held device such as a mobile phone. In addition, if the platform sections have separate and independent control logic 350, these processing units may still share information with one another, such as status, safe operation information, etc.

In one embodiment, as shown in FIG. 3, the two platform sections (310, 330) are movably coupled to one another with the shaft 370 about which they may rotate (or pivot with respect to one another). Brackets and flange brackets may secure the shaft to the platform sections, with the flange brackets preferably configured to prevent or reduce the entry of dirt or moisture within the housings. The shaft 370 may be hollow in part and thereby allowing for the passage of conduits therethrough. Pivoting or rotating shaft arrangements are known in the art, and others may be used without deviating from the present invention as long as the foot placement sections may move independently.

In another embodiment, the balancing board 300 may include a motion sensor 380 to detect the user's motion, and when the motion sensor 380 detects a pre-stored motion from the user, the motion sensor 380 may transmit such information to the motors (317, 337) and the wheels (315, 335) through the wireless communicating module 360 to trigger the balancing board 300 to make certain movement. For example, the motion sensor 380 detects the user's left foot stomps on the ground twice, which is a pre-stored motion in memory 390 and corresponding to a specific movement of the balancing board 300 (e.g. moving around the user twice), the result of the detection may be transmitted to the motors (317, 337) and wheels (315, 335) of the balancing board 300 to move around the user twice.

In a further embodiment, the balancing board 300 further includes a water jet 360 that includes a water receiving space 361 and a water fog generating unit 362. More specifically, when the user stands on the balancing board, the weight of the user can trigger the water jet 360, wherein the water can be transported to the water fog generating unit 362 from the water receiving space 361 and the water fog can then be generated, so there is more entertainment effect when the user stands on the balancing board.

Having described the invention by the description and illustrations above, it should be understood that these are exemplary of the invention and are not to be considered as limiting. Accordingly, the invention is not to be considered as limited by the foregoing description, but includes any equivalent.

## Claims

1. A balancing board comprising a first platform section and a second platform section, each platform section comprising a housing formed of a bottom housing member and a top housing member; said top housing members having a foot placement section formed integrally therewith or affixed thereon and configured to receive a user's feet; a position sensor for independently measure a position of the respective platform section; a motor; and a wheel;
wherein the two platform sections are movably coupled to one another with a shaft about which they rotate, and a control logic is configured to translate position data to said motors to drive the two platform sections

2. The balancing board of claim 1, further comprising a water jet that includes a water receiving space and a water fog generating unit.

3. The balancing board of claim 1, wherein when the user stands on the balancing board, the weight of the user triggers the water jet, and the water can be transported to the water fog generating unit from the water receiving space to generate the water fog.
